# EUROPÄISCHE PATENTSCHRIFT

(11) **EP 3 021 444 B1**
(45) Veröffentlichungstag und Bekanntmachung des Hinweises auf die Patenterteilung: **20.03.2019**
(21) Anmeldenummer: 15187433.6
(22) Anmeldetag: 29.09.2015
(51) Int. Cl.: H02H 9/00, H02H 9/04

(54) **SCHALTUNG ZUM SCHUTZ VOR ÜBERSPANNUNGEN**
CIRCUIT FOR PROTECTION AGAINST OVERVOLTAGES
CIRCUIT DE PROTECTION CONTRE LES SURTENSIONS

(30) Priorität: 17.11.2014 DE 102014116734
(43) Veröffentlichungstag der Anmeldung: 18.05.2016
(73) Patentinhaber: Eaton Intelligent Power Limited, Dublin 4 (IE)
(72) Erfinder: Boecker, Olaf, 53347 Alfter (DE); Horea, Culca, 53797 Lohmar (DE)
(74) Vertreter: Eaton IP Group EMEA

(56) Entgegenhaltungen:
- US-A1- 2004 257 742
- US-B1- 6 226 166

## Beschreibung

Die Erfindung betrifft eine Schaltung zum Schutz vor Überspannungen, umfassend:
- eine Eingangsseite, an der eine Eingangsspannung anlegbar ist,
- eine Ausgangsseite, an der eine Ausgangsspannung abgreifbar ist, und
- ein Überspannungsschutzelement, welches parallel zur Eingangsseite geschaltet ist und eingerichtet ist, bei Auftreten eines Überspannungsimpulses an der Eingangsseite zumindest einen Teil des Überspannungsimpulses über einen ersten Strompfad abzuleiten.

Eine derartige Schaltung findet herkömmlich in elektronischen Geräten Anwendung, die mit elektrischer Energie über Versorgungsklemmen versorgt werden. Insbesondere elektronische Automatisierungsgeräte werden beispielsweise mit +24 V Gleichspannung versorgt. Unterschiedliche Ereignisse, wie Schalten von induktiven Lasten, Blitzeinschläge oder ein Einkoppeln von Störspannungen durch elektrische Leitungen, können dazu führen, dass in die Versorgungsspannung energiereiche Störimpulse (so genannte "Surges") eingekoppelt werden. Die Impulsspannung von solchen Störimpulsen beziehungsweise Überspannungsimpulsen ist vergleichsweise sehr hoch und kann ohne geeignete Schutzmaßnahmen zur Zerstörung elektronischer Bauelemente in elektronischen Geräten führen.

Elektronische Schaltungen müssen daher gegen diese Art von Störungen geschützt werden, um die Zerstörung von Bauelementen zu vermeiden. In industrieller Umgebung sind durch entsprechende Normen (zum Beispiel die Normen IEC/EN 61131-2 bzw. IEC/EN 61000-6-2) Überspannungsimpulse von z.B. 500 V für eine DC-versorgung angegeben. Bei einer Einkoppelung über einen Serienwiderstand von 2 Ohm kann dies theoretisch zu Stromimpulsen von bis zu 250 A führen.

Zum Schutz elektronischer Bauteile vor derartigen Überspannungen sind Schaltungen der obigen Art bekannt. Standardmäßig werden als Überspannungsschutzelemente Varistoren, Thyristoren oder so genannte Suppressordioden eingesetzt. Diese Bauelemente leiten zumindest einen Teil eines Stromimpulses zu einem Bezugspotenzial ab und begrenzen einen Überspannungsimpuls auf einen deutlich niedrigeren Pegel. Je nach Art des Bauelementes können zum Beispiel Überspannungsimpulse bis auf etwa 50 bis 60 V (bei Suppressordioden) beziehungsweise etwa 100 V (bei Varistoren) unterdrückt werden.

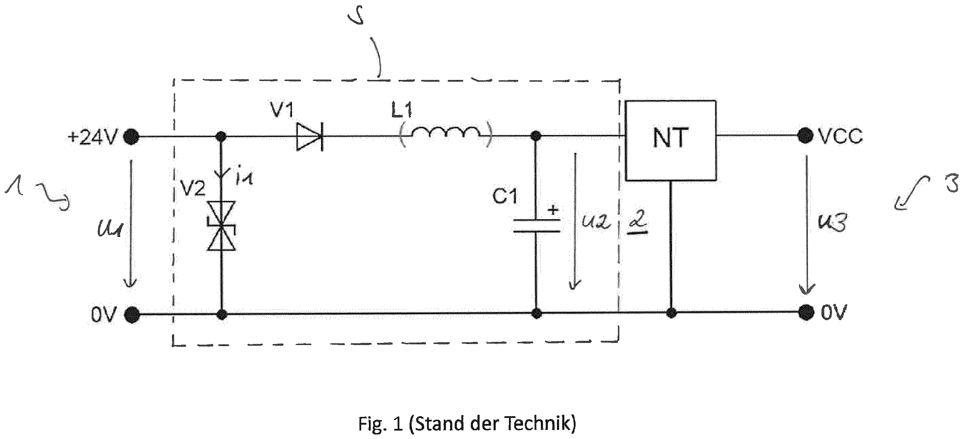

In Schutzschaltungen gemäß dem Stand der Technik, für die Figur 1 beispielhaft eine Ausführungsform zeigt, werden neben Suppressordioden (vergleiche V2 in der Schutzschaltung S in Figur 1) weitere Filterelemente, wie beispielsweise eine Serien-Filterspule L1 und ein Elektrolyt-Pufferkondensator C1 eingesetzt. Der Pufferkondensator C1 filtert zusätzlich einen Überspannungsimpuls u1 an einem Eingang 1 der Schaltung, so dass die tatsächliche Höhe eines Störimpulses nochmals herabgesetzt wird. Nachfolgende elektronische Bauelemente (siehe Spannungswandler NT in Figur 1 oder weitere Komponenten, die an einer Betriebsseite 3 über eine VCC-Versorgungsspannung u3 versorgt werden können) sind dadurch geschützt.

Im Falle von sehr kleinen bzw. kompakten Geräten mit stark begrenztem Bauraum oder in Fällen, in denen ein Elektrolytkondensator mit ausreichender Kapazität zur Filterung eines Überspannungsimpulses nicht vorhanden ist beziehungsweise aus Platzgründen nicht eingesetzt werden kann, ist der Einsatz einer Suppressordiode unter Umständen nicht ausreichend, um eine gänzliche Unterdrückung eines Überspannungsimpulses zu bewirken und eine Zerstörung empfindlicher Bauelemente zu vermeiden. In einem solchen Fall ist eine zusätzliche Schutzmaßnahme notwendig.

Aus dem Stand der Technik ist bekannt, einen Feldeffekttransistor in einem Serienpfad der Schutzschaltung einzusetzen, welcher bei Erreichen einer bestimmten Eingangsspannungshöhe sperrt und somit die elektrisch nachgeschalteten Schaltungsteile schützt. Herkömmliche Lösungen haben den Nachteil, dass eine Eingangsspannung der Schutzschaltung deutlich höher dimensioniert sein muss als die Ausgangsspannung, damit der Feldeffekttransistor für einen Normalbetrieb geöffnet ist. Dies kann im konkreten Fall zum Beispiel einen Spannungsverlust von circa 3 V bedeuten. Zusätzlich wird auch bei relativ hohen Nennströmen (zum Beispiel circa 3 bis 4 A) die Verlustleistung des Feldeffekttransistors sehr hoch. Andere Lösungen der US 8,068,321 B2 und der CN 203415972 schlagen sehr spezielle Transistor-Bauweisen beziehungsweise komplexe Ansteuerungen für die Schutzfunktion vor, welche jedoch in der Praxis aufwendig und nachteilig sein können.

Die US2004/0257742 zeigt eine Schutzschaltung mit einem Überspannungsschutzelement und einem parallel dazu verschalteten Feldeffekttransistor, wobei ein erster Strompfad durch das Überspannungsschutzelement gebildet werden kann und ein zweiter Strompfad durch den Feldeffekttransistor gebildet werden kann.

D1 offenbart eine gegenteilige Lösung, unterschiedliche Schutzelemente für unterschiedliche Energielevel derart zu dimensionieren, dass im Falle eines hohen Überspannungsimpulses gerade ein erster Strompfad abgestellt wird und auf einen zweiten Strompfad gewechselt wird.

Es ist somit die Aufgabe der vorliegenden Erfindung, eine Schaltung zum Schutz vor Überspannungen gemäß der eingangs erläuterten Art aufzuzeigen, die einfach, preiswert und platzsparend ist und dennoch einen ausreichenden Schutz vor Überspannungsimpulsen bietet.

Diese Aufgabe wird durch eine Schaltung gemäß Anspruch 1 gelöst.

Die erfindungsgemäße Schaltung ist dadurch gekennzeichnet, dass zusätzlich zum Überspannungsschutzelement ein Schutz-Transistor in der Schaltung eingesetzt wird. Der Schutz-Transistor ist parallel zur Ausgangsseite der Schaltung geschaltet und geht bei Auftreten eines Überspannungsimpulses an der Eingangsseite von einem Sperrbetrieb in einen leitenden Betrieb über. Dabei wird ein zum ersten Strompfad (am Überspannungsschutzelement) paralleler zweiter Strompfad entlang des Schutz-Transistors gebildet, so dass sich ein Gleichgewicht der ersten und zweiten Strompfade am Überspannungsschutzelement und am Schutz-Transistor bildet und über den zweiten Strompfad im Wesentlichen der restliche Überspannungsimpuls abgeleitet werden kann.

Der Wortlaut "im Wesentlichen der restliche Überspannungsimpuls" soll im Kontext dieser Offenbarung verstanden werden als das Ableiten einer Überspannung derart, dass elektrisch nachgeschaltete Bauteile beziehungsweise Komponenten vor einer Überspannung beziehungsweise einem schädigenden Stromstoß geschützt werden. Dabei ist denkbar, vermittels der Schaltung der obigen Art den gesamten restlichen Überspannungsimpuls abzuleiten. Es ist unter der obigen Formulierung jedoch auch zu verstehen, dass ein signifikanter Anteil des restlichen Überspannungsimpulses über den zweiten Strompfad abgeleitet wird, wobei ein Rest des Überspannungsimpulses verbleibt, der nicht abgeleitet wird. So können je nach Anwendungsfall z.B. 60%, 70%, 80%, 90%, 95% oder nahezu 100% des restlichen Überspannungsimpulses als "im Wesentlichen restlicher Überspannungsimpuls" angesehen werden. Je nach Auslegung und Dimensionierung der Bauteile in der Schaltung können z.B. 100 V als restlicher Überspannungsimpuls bis auf 40 V, bis auf 30 V, bis auf 20 V, bis auf 10V oder bis auf nahezu 0 V über den zweiten Strompfad abgeleitet werden.

Der Schutz-Transistor wird in der erfindungsgemäßen Schaltung nicht als Serien-, sondern als Parallel-Element eingesetzt. Wenn ein Überspannungsimpuls an der Eingangsseite der Schaltung anliegt, so wechselt der Schutz-Transistor vom Sperrbetrieb in den leitenden Betrieb und leitet neben dem Überspannungsschutzelement einen weiteren Teil des Überspannungsimpulses über einen Strom zu einem Bezugspotenzial hin ab. Auf diese Weise bildet sich ein Gleichgewicht der ersten und zweiten Strompfade am Überspannungsschutzelement und am Schutz-Transistor, so dass letztendlich der Überspannungsimpuls an der Eingangsseite der Schutzschaltung im Wesentlichen unterdrückt werden kann. Elektrisch nachgeschaltete Bauteile beziehungsweise Komponenten werden somit vor einer Überspannung beziehungsweise einem schädigenden Stromstoß geschützt.

Ein Vorteil der erfindungsgemäßen Schaltung besteht darin, dass der Schutz-Transistor nicht in Reihe mit dem Hauptstrom geschaltet ist. Auf diese Weise beeinflusst der Schutz-Transistor die normale Funktion der Schaltung nicht, egal wie hoch der Nennstrom ist. Die Verlustleistung der Schaltung ist auch bei höheren Strömen (zum Beispiel 4 A) sehr gering im Vergleich zu herkömmlichen Schutzschaltungen.

Ferner hat die Schaltung den Vorteil, dass Elektrolytkondensatoren mit hoher Kapazität nicht eingesetzt werden müssen. Dies spart Bauraum. Die vorgestellte Schaltung stellt somit eine sehr einfache, preiswerte und platzsparende Lösung dar.

Vorzugsweise ist der Schutz-Transistor ein Feldeffekttransistor, der mit seinen Drain- und Source-Anschlüssen zwischen einem Ausgangspotenzial an der Ausgangsseite liegt und einem Bezugspotenzial verschaltet ist. Bevorzugt ist der Schutz-Transistor ein Feldeffekttransistor vom Typ NMOS, wobei der Drain-Anschluss des Schutz-Transistors auf dem Ausgangspotenzial an der Ausgangsseite liegt und der Source-Anschluss des Schutz-Transistors auf dem Bezugspotenzial liegt.

Es ist alternativ jedoch auch denkbar, einen Feldeffekttransistor vom Typ PMOS als Schutz-Transistor einzusetzen. Dann wären Drain- und Source-Anschlüsse entsprechend umgekehrt definiert, sodass der Source-Anschluss des Schutz-Transistors auf dem Ausgangspotenzial an der Ausgangsseite liegt und der Drain-Anschluss des Schutz-Transistors auf dem Bezugspotenzial liegt.

Der Einsatz eines Feldeffekttransistors hat den Vorteil, dass er mit einem sehr kleinen Vorwärtswiderstand zwischen Drain- und Source-Anschluss (so genannter "Rdson") dimensioniert werden kann. Auf diese Weise werden die Verlusteigenschaften am Schutz-Transistor minimiert, während die Ableitungseigenschaften eines elektrischen Stromstoßes aufgrund eines Überspannungsimpulses verbessert werden. Idealerweise arbeitet der Schutz-Transistor im leitenden Betrieb als Quasi-Kurzschluss, welcher Stromstöße aus einem Überspannungsimpuls wirksam zum Bezugspotenzial hin ableitet. Dies erhöht den Schutz elektrisch nachgeschalteter Bauteile und Komponenten, welche durch die Schaltung abgesichert sind.

Vorzugsweise wird der Schutz-Transistor über eine Steuervorrichtung angesteuert, welche einen Übergang des Schutz-Transistors zwischen einem Sperrbetrieb und einem leitenden Betrieb steuert.

Im Falle einer Bauart des Schutz-Transistors als Feldeffekttransistor ist die Steuervorrichtung zu den Drain- und Source-Anschlüssen des Schutz-Transistors parallel geschaltet, wobei die Steuervorrichtung eine Serienschaltung aus einer Zener-Diode und einem Widerstand umfasst, und wobei der Gate-Anschluss des Schutz-Transistors zwischen die Zener-Diode und den Widerstand geschaltet ist.

Nachfolgend wird eine Topologie bei Verwendung eines NMOS-Schutz-Transistors dargestellt. Die Funktionsweise einer derartigen Topologie ist folgendermaßen. Wenn an der Eingangsseite der Schaltung ein Überspannungsimpuls anliegt, steigt der Strom durch das Überspannungsschutzelement und somit auch die Spannung an der Steuervorrichtung an. Erreicht diese Spannung die Durchbruchspannung der in Sperrrichtung verschalteten Zener-Diode der Steuervorrichtung, so bricht diese durch. Steigt die Spannung an der Steuervorrichtung weiter, so folgt die Spannung am Widerstand dieser, abzüglich der Durchbruchspannung an der Zener-Diode, wobei durch den Widerstand der Steuervorrichtung ein entsprechender Strom zum Bezugspotenzial hin fließt. Die Spannung am Widerstand entspricht dem Betrag der Gate-Source-Spannung am Schutz-Transistor. Erreicht diese Spannung eine Schwell-Spannung (Threshold) des Schutz-Transistors, so schaltet der Schutz-Transistor vom Sperrbetrieb in den leitenden Betrieb. Dabei wird der zweite Strompfad entlang des Schutz-Transistors gebildet, sodass ein Strom aus dem Überspannungsimpuls gleichzeitig über das Überspannungsschutzelement und den Schutz-Transistor in Richtung des Bezugspotenzial abfließen kann. Auf diese Weise unterdrückt der Schutz-Transistor, gesteuert durch die Steuervorrichtung, einen Überspannungsimpuls an der Eingangsseite der Schutzschaltung. Es bildet sich ein Gleichgewicht der zwei Strompfade, so dass der Überspannungsimpuls abflaut, ohne dass Störströme elektrisch nachgeschaltete Bauelemente oder Komponenten belasten.

In einem Normalbetrieb ist die Zener-Diode der Steuervorrichtung jedoch in einem Sperrbetrieb, so dass kein signifikanter Strom durch den Widerstand der Steuervorrichtung fließt. Der Widerstand zieht daher die Gate-Source-Spannung des Schutz-Transistors auf das Bezugspotential. Dadurch wird die Gate-Source-Spannung des Schutz-Transistors auf einem Niveau unterhalb einer Schwell-Spannung gehalten. Somit ist der Schutz-Transistor im Normalbetrieb im Sperrbetrieb und beeinflusst die an der Ausgangsseite der Schaltung anliegende Ausgangsspannung zur Versorgung nachgeschalteter Komponenten nicht.

Der Schutz-Transistor könnte alternativ zur Bauweise als Feldeffekttransistor auch in Bipolarbauweise ausgeführt sein, wobei Kollektor und Emitter parallel zur Ausgangsseite der Schaltung geschaltet sind. In diesem Falle wäre die Steuervorrichtung zumindest derart abzuwandeln, dass sie zu den Kollektor- und Emitter-Anschlüssen des Schutz-Transistors parallel geschaltet ist, wobei der Basis-Anschluss des Schutz-Transistors über einen Basiswiderstand zwischen die Zener-Diode und den Widerstand der Steuervorrichtung geschaltet ist. Vermittels der Zener-Diode kann dann am Basiswiderstand ein Basisstrom eingestellt werden, welcher den Schutz-Transistor zwischen dem Sperrbetrieb und dem leitenden Betrieb für die Funktion der Schutzschaltung steuert.

Vorteilhaft wird die erläuterte Schaltung in einer Anordnung mit zumindest einem Spannungswandler eingesetzt, wobei der Spannungswandler an der Ausgangsseite der Schaltung angeschlossen ist zum Wandeln einer eingangsseitigen Versorgungsspannung in eine Betriebsspannung für dem Spannungswandler elektrisch nachgeschaltete Komponenten. Vorteilhaft wird eine derartige Anordnung wiederum in einem elektronischen Gerät eingesetzt. Das elektronische Gerät kann jegliche Art von Gerät umfassen. Beispielsweise ist eine entsprechende Schaltungsanordnung in einer industriellen speicherprogrammierbaren Steuerung (so genannte SPS) eingesetzt.

Weitere vorteilhafte Aspekte und zusätzliche Ergänzungen sowie bevorzugte Ausführungsformen werden in den Unteransprüchen sowie in der nachfolgenden Figurenbeschreibung offenbart.

Die Erfindung wird nachfolgend anhand mehrerer Zeichnungen näher erläutert.

Es zeigen:
- Figur 1: eine Schaltungsanordnung zum Schutz vor Überspannungen nach dem Stand der Technik,
- Figur 2: eine erste Ausführungsform einer erfindungsgemäßen Schutzschaltung,
- Figur 3: eine weitere Ausführungsform einer erfindungsgemäßen Schutzschaltung und
- Figur 4: eine Anordnung mit einer Schutzschaltung gemäß Figur 2 und weiterer Komponenten.

Figur 1 zeigt eine Schaltungsanordnung zum Schutz vor Überspannungen nach dem Stand der Technik, wie sie bereits eingangs kurz erläutert worden ist. Die Anordnung umfasst eine Schaltung S mit einer Eingangsseite 1, an der eine Eingangsspannung u1 von +24 V Gleichspannung im Normalbetrieb anliegt. An der Ausgangsseite 2 der Schaltung S ist die Ausgangsspannung u2 abgreifbar. An der Ausgangsseite 2 ist ein Spannungswandler NT verschaltet, der seinerseits an einer Betriebsseite 3 eine VCC-Betriebsspannung u3 für elektrisch nachgeschaltete Komponenten in einem elektronischen Gerät bereitstellt. Beispielsweise kann eine Betriebsspannung für integrierte Bauelemente auf einem Systemboard eines elektronischen Gerätes zur Verfügung gestellt werden.

Die Schaltung S umfasst ein Überspannungsschutzelement V2, welches gemäß Figur 1 als Suppressordiode ausgeführt ist und parallel zur Eingangsseite 1 verschaltet ist. In einem nachgeschalteten Serienpfad sind eine Verpolungsschutzdiode V1 sowie eine Serien-Filterspule L1 in Serie geschaltet. Weiterhin ist an der Ausgangsseite 2 der Schaltung S ein Pufferkondensator C1 parallel geschaltet. Der Pufferkondensator C1 kann beispielsweise als Elektrolytkondensator ausgeführt sein.

Wie bereits eingangs erläutert, wird über diese herkömmliche Schaltung S ein Überspannungsimpuls an der Eingangsseite derart unterdrückt, dass über einen ersten Strompfad i1 vermittels der Suppressordiode V2 ein elektrischer Strompuls zum Bezugspotenzial (0 V) abgeleitet wird. Der restliche Überspannungsimpuls wird über die Filterelemente L1 und C1 gefiltert, so dass idealerweise der Überspannungsimpuls unterdrückt werden kann. Nachfolgende Komponenten, wie der Spannungswandler NT oder andere Komponenten an der Betriebsseite 3, werden vor einem Schaden geschützt. Negative Überspannungsimpulse an der Eingangsseite 1 werden vermittels der Verpolungsschutzdiode V1 unterdrückt, welche in einem derartigen Zustand sperrt.

Eine derartige Schaltung S nach dem Stand der Technik hat den Nachteil, dass ein Pufferkondensator C1 für Überspannungsimpulse einer vorbestimmten Norm eine sehr große Kapazität aufweisen muss und damit einen entsprechenden Bauraum benötigt. Somit ist eine derartige Schaltung in miniaturisierten Bauformen von Kleinstgeräten kaum realisierbar.

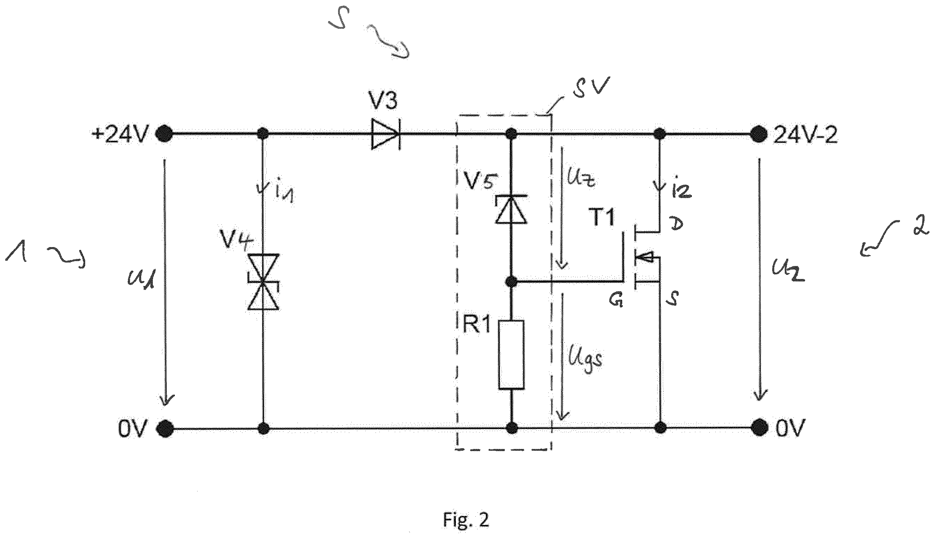

Figur 2 zeigt eine erste Ausführungsform einer erfindungsgemäßen Schaltung S, welche sich im Wesentlichen dadurch auszeichnet, dass anstelle der Filterelemente L1 und C1 gemäß der Anordnung aus Figur 1 nunmehr ein Schutz-Transistor T1 sowie eine Steuervorrichtung SV in Parallelschaltung zwischen der Eingangsseite 1 und der Ausgangsseite 2 der Schaltung eingerichtet sind.

Der Schutz-Transistor T1 ist gemäß Figur 2 als Feldeffekttransistor in NMOS-Bauweise ausgeführt. Der Drain-Anschluss D des Schutz-Transistors T1 ist auf ein Ausgangspotenzial 24V-2 gelegt, während der Source-Anschluss S des Schutz-Transistors T1 auf dem Bezugspotenzial 0 V liegt. Somit ist der Schutz-Transistor T1 mit seinen Drain- und Source-Anschlüssen D und S parallel zur Ausgangsseite 2 der Schaltung S verschaltet.

Die Steuervorrichtung SV zur Ansteuerung des Schutz-Transistors T1 umfasst vom höheren Potenzial zum Bezugspotenzial 0 V betrachtet eine Serienschaltung aus einer in Sperrrichtung geschalteten Zener-Diode V5 und einem elektrischen Widerstand R1. Der Gate-Anschluss G des Schutz-Transistors T1 ist zwischen die Zener-Diode V5 und den Widerstand R1 geschaltet.

Die Funktion der Suppressordiode V4 sowie der Verpolungsschutzdiode V3 gemäß Figur 2 ist im Wesentlichen gleich zur Funktion der entsprechenden Elemente V2 und V1 aus Figur 1.

Die Schaltung S gemäß der Ausführungsform aus Figur 2 besitzt die folgende Funktionalität.

Im Normalbetrieb arbeitet die Schaltung S mit einer Versorgungsgleichspannung von +24 V an der Eingangsseite 1. Wenn an der Eingangsseite 1 die Eingangsspannung u1 über Gebühr ansteigt, so dass ein Überspannungsimpuls vorliegt, so gerät die Suppressordiode V4 bei Überschreiten einer entsprechenden Durchbruchspannung in einen leitenden Betrieb. Über einen ersten Strompfad i1 wird ein entsprechender Strompuls zum Bezugspotenzial 0 V hin abgeleitet. Auf diese Weise wird zumindest ein Teil eines Überspannungsimpulses an der Eingangsseite 1 über die Suppressordiode V4 unterdrückt.

Die an der Suppressordiode V4 ansteigende Spannung hat zudem einen Spannungsanstieg an der parallel geschalteten Steuervorrichtung SV zur Folge, der lediglich um die Vorwärtsspannung an der Verpolungsschutzdiode V3 reduziert ist (üblicherweise circa 0,7 V). Übersteigt die Spannung Uz an der Zener-Diode V5 deren Durchbruchspannung, so fließt durch die Zener-Diode V5 und den Widerstand R1 in Richtung Bezugspotenzial 0 V ein elektrischer Strom. Dies führt dazu, dass am Widerstand R1 eine elektrische Spannung abfällt. Diese Spannung entspricht der Gate-Source-Spannung Ugs am Schutz-Transistor T1. Überschreitet diese Spannung eine Schwell-Spannung (Threshold), so geht der Schutz-Transistor T1 von einem anfänglichen Sperrbetrieb über in einen leitenden Betrieb, wobei ein zum ersten Strompfad i1 paralleler zweiter Strompfad i2 entlang des Schutz-Transistors T1 gebildet wird. Auf diese Weise stellt sich ein Gleichgewicht der beiden Strompfade i1 und i2 entlang der jeweiligen Überspannungsschutzelemente V4 und T1 ein, so dass der Überspannungsimpuls an der Eingangsseite 1 durch die Schaltung S wirksam unterdrückt werden kann.

Folgende Beispielrechnung soll die Wirkungsweise der Schaltung S nochmals verdeutlichen. Die Zener-Diode V5 ist beispielsweise derart dimensioniert, dass sie eine Durchbruchspannung Uz von 33 V aufweist. Erhöht sich demnach die Eingangsspannung u1 an der Eingangsseite 1 der Schaltung S über +24 V und übersteigt die Spannung u2 an der Steuervorrichtung SV einen Betrag von 33 V (so dass an der in Sperrrichtung verschalteten Zener-Diode V5 schließlich die Durchbruchspannung Uz von 33 V überschritten wird), so steigt die Spannung am Widerstand R1 auf u2 - Uz. Erreicht diese Spannung die Schwell-Spannung Ugsth des Schutztransistors T1, in der Regel etwa 2V, so geht dieser vom Sperrbetrieb über in einen leitenden Betrieb, wie erläutert. Die Schutz-Schwelle ist somit Uz + Ugsth, in diesem Beispiel ca. 35V.

Sinkt die Eingangsspannung u1 wieder ab, so dass die Gate-Source-Spannung Ugs die Schwelle Ugsth unterschreitet, so geht der Schutz-transistor T1 vom leitendem Betrieb wieder in den Sperrbetrieb über. Sinkt die Spannung u1 weiter unter Uz, so sperrt auch die Zenerdiode V5 und dadurch fließt kein Strom mehr. Die Spannung an R1 ist dann 0V.

Eine Dimensionierung der Suppressordiode V4 und der Steuervorrichtung SV sowie des Schutz-Transistors T1 ist derart zu wählen, dass eine ausreichende Unterdrückung eines Überspannungsimpulses gewährleistet werden kann.

Durch die in Figur 2 erläuterte Schaltung S werden somit elektronische Komponenten, die an der Ausgangsseite 2 angeschlossen sind (nicht dargestellt), wirksam vor Störimpulsen geschützt. Ferner hat die Schaltung S den entscheidenden Vorteil, dass aufgrund einer Parallelschaltung des Schutz-Transistors T1 dieser im Normalbetrieb der Schaltung S quasi "unsichtbar" ist und keinen Anteil an der Verlustleistung hat. Denn im Normalbetrieb verhält sich der Schutz-Transistor T1 quasi wie ein Leerlauf, während er lediglich im Überspannungsfall Quasi-Kurzschlusseigenschaften besitzt. Die Verlustleistung der Schaltung S ist gemäß Figur 2 lediglich auf die Vorwärtsspannung der Verpolungsschutzdiode V3 beschränkt. Auch entfallen bei der Schaltung nach Figur 2 kostenintensive und bauraumaufwändige Elektrolyt-Pufferkondensatoren, wie sie bei herkömmlichen Schaltungen nach dem Stand der Technik gemäß Figur 1 notwendig sind.

Gemäß einer zu Figur 2 alternativen Ausführungsform (nicht dargestellt) kann der Schutz-Transistor T1 anstelle eines NMOS-Transistors auch als PMOS-Transistor ausgeführt sein. In diesem Fall liegt der Source-Anschluss S von T1 auf dem Ausgangspotential 24V-2 und der Drain-Anschluss D auf dem Bezugspotential 0 V. Ferner ist die Steuervorrichtung SV derart auszuführen, dass die Verschaltung der Zener-Diode V5 und des Widerstands R1 umgekehrt zu der in Figur 2 dargestellten Form ist. In diesem Fall ist der Widerstand R1 zwischen dem Ausgangspotential 24V-2 und dem Gate-Anschluss G von T1 verschaltet, während die Zener-Diode V5 zwischen dem Gate-Anschluss G von T1 und dem Bezugspotential 0 V verschaltet ist.

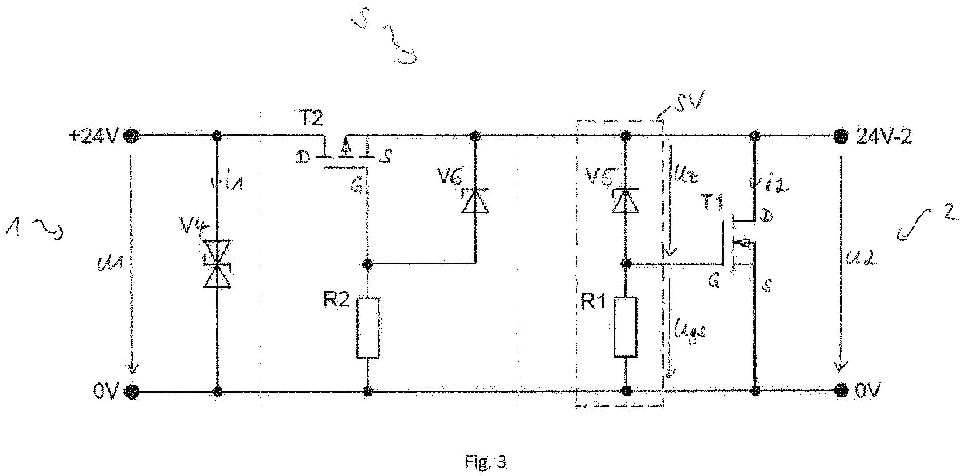

Figur 3 zeigt eine alternative Ausführungsform einer erfindungsgemäßen Schaltung S, welche sich zur Schaltung S aus Figur 2 lediglich in einer veränderten Verpolungsschutzschaltung unterscheidet.

Anstelle einer Verpolungsschutzdiode V3 gemäß Figur 2 ist ein Verpolungsschutz in der Schaltung S in Figur 3 durch einen Feldeffekttransistor T2 im Serienpfad zwischen der Suppressordiode V4 und der Steuervorrichtung SV für den Schutz-Transistor T1 realisiert. Der Feldeffekttransistor T2 ist in PMOS-Bauform ausgeführt. Der Drain-Anschluss D des Transistors T2 ist in Richtung der Eingangsseite 1 der Schaltung 1 orientiert, während der Source-Anschluss S des Transistors T2 in Stromrichtung zur Ausgangsseite 2 hin orientiert ist. Mit seinem Gate-Anschluss G ist der Transistor T2 über einen zweiten Widerstand R2 mit dem Bezugspotenzial 0 V verschaltet. Parallel zu den Source- und Gate-Anschlüssen S, G des Transistors T2 ist eine weitere Zener-Diode V6 zur Begrenzung der Gate-Source-Spannung unter dem maximal erlaubten Wert, meistens 20V, verschaltet. Eine derartige Verschaltung stellt eine gängige Verpolungsschutzschaltung dar.

Im Falle einer Polung der Eingangsseite 1 gemäß Figur 3 mit einer positiven Eingangsspannung u1, wie dargestellt, ist im ersten Moment der Transistor T2 gesperrt, da u2 = 0. MOS-Transistoren beinhalten technologisch bedingt eine parasitäre Diode zwischen Drain und Substrat, das mit Source verbunden ist, die im Falle der PMOS-Bauweise mit der Anode an Drain und der Kathode an Source angeordnet ist. Diese Diode ist dann in diesem Fall in Vorwärtsrichtung leitend geschaltet und u2 wird dadurch gleich u1 abzüglich der Dioden-Vorwärtsspannung. Somit wird die Gate-Source-Spannung negativ und der Transistor T2 leitet. Durch eine entsprechend kleine Dimensionierung des Kanalwiderstands ("Rdson") am Transistor T2 kann auch die Verlustleistung am Transistor T2 entsprechend minimiert werden. So ist es durchaus denkbar, eine Verlustleistung der Schaltung S gemäß Figur 3 noch deutlich geringer zu dimensionieren als eine Verlustleistung der Schaltung S gemäß Figur 2.

Im Falle einer umgekehrten Polung der Schaltung S aus Figur 3, wonach die Eingangsspannung u1 negativ würde, gerät der Transistor T2 in einen Sperrbetrieb, weil die parasitäre interne Diode in Sperrrichtung geschaltet ist und Gate G und Source S das gleich Potential annehmen, also Ugs=0 ist Auf diese Weise verhindert der Transistor T2 eine umgekehrte Polung an der Ausgangsseite 2 der Schaltung S.

Die weitere Funktionsweise der Schaltung S aus Figur 3 entspricht im Wesentlichen der Schaltung S aus Figur 2 und bedarf an dieser Stelle keiner weiteren Erläuterung.

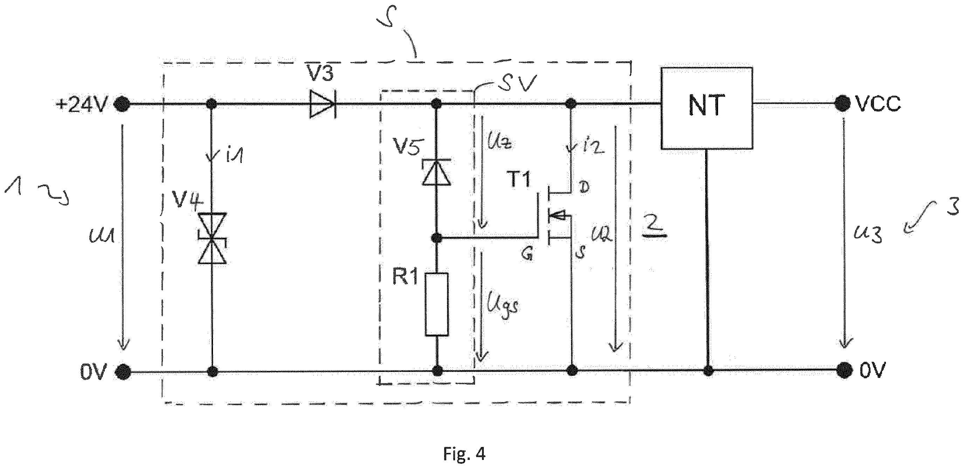

Figur 4 zeigt nochmals die Schaltung S gemäß Figur 2 in einer Anordnung mit einem Spannungswandler NT, der an der Ausgangsseite 2 der Schaltung S verschaltet ist und über eine Ausgangsspannung u2 der Schaltung S versorgt wird. Der Spannungswandler NT erzeugt wiederum eine VCC-Versorgungsspannung u3, die an einer Betriebsseite 3 nachgeschalteten Komponenten zur Verfügung gestellt wird.

Beispielsweise findet eine solche Schaltungsanordnung, wie Figur 4 sie zeigt, in elektronischen Geräten Anwendung, die über eine Versorgungsgleichspannung von +24 V versorgt werden und geräteinterne Komponenten und Bauteile, zum Beispiel integrierte Bauelemente (ICs) auf einem Systemboard, enthalten. Derartige Geräte können beispielsweise industrielle speicherprogrammierbare Steuerungen sein. Sämtliche andere Arten elektronischer Geräte der Regel- beziehungsweise Automatisierungstechnik oder weiterer industrieller Anwendungen, aber auch elektronische Endgeräte können sich einer solchen Schaltungsanordnung bedienen.

Die dargestellten Ausführungsformen einer erfindungsgemäßen Schaltung S sind lediglich beispielhaft gewählt und wirken nicht einschränkend auf die Erfindung.

### Bezugszeichenliste

- 1: Eingangsseite
- 2: Ausgangsseite
- 3: Betriebsseite
- u1: Eingangsspannung
- u2: Ausgangsspannung
- u3: Betriebsspannung
- i1: erster Strompfad
- i2: zweiter Strompfad
- V1, V3: Verpolungsschutzdiode
- V2, V4: Überspannungsschutzelement
- V5, V6: Zener-Diode
- R1, R2: Widerstand
- S: Schaltung
- T1: Schutz-Transistor
- T2: Verpolungsschutz-Transistor
- L1: Serien-Filterspule
- C1: Pufferkondensator
- NT: Spannungswandler
- VCC: Betriebsspannung für nachfolgende Komponenten
- 24 V-2: Ausgangspotenzial
- +24 V: Eingangspotenzial
- 0 V: Bezugspotenzial
- SV: Steuervorrichtung
- G: Gate
- S: Source
- D: Drain
- Uz: Zenerspannung
- Ugs: Gate-Source-Steuerspannung des MOS-Transistors
- Ugsth: Gate-Source-Schwellenspannung

## Patentansprüche

1. Schaltung (S) zum Schutz vor Überspannungen, umfassend:
- eine Eingangsseite (1), an der eine Eingangsspannung (u1) anlegbar ist,
- eine Ausgangsseite (2), an der eine Ausgangs-spannung (u2) abgreifbar ist, und
- ein Überspannungsschutzelement (V4), welches parallel zur Eingangsseite (1) geschaltet ist und eingerichtet ist, bei Auftreten eines Überspannungsimpulses an der Eingangsseite (1) zumindest einen Teil des Überspannungsimpulses Z über einen ersten Strompfad (i1) abzuleiten,
**dadurch gekennzeichnet, dass**
ein Schutz-Transistor (T1) parallel zur Ausgangsseite (2) geschaltet ist und bei Auftreten eines Überspannungsimpulses an der Eingangsseite (1) von einem Sperrbetrieb in einen leitenden Betrieb übergeht, wobei ein zum ersten Strompfad (i1) paralleler zweiter Strompfad (i2) entlang des Schutz-Transistors (T1) gebildet wird, so dass sich ein Gleichgewicht der ersten und zweiten Strompfade (i1, i2) am Überspannungsschutzelement (V4) und am Schutz-Transistor (T1) bildet und über den zweiten Strompfad (i2) im Wesentlichen der restliche Überspannungsimpuls abgeleitet werden kann.

2. Schaltung (S) nach Anspruch 1, **dadurch gekennzeichnet, dass** der Schutz-Transistor (T1) ein Feldeffekttransistor ist, der mit seinen Drain- und Source-Anschlüssen (D, S) zwischen einem Ausgangspotential (24V-2) an der Ausgangsseite (2) und einem Bezugspotential (0V) verschaltet ist.

3. Schaltung (S) nach Anspruch 2, **dadurch gekennzeichnet, dass** der Schutz-Transistor (T1) ein Feldeffekttransistor vom Typ NMOS ist, wobei der Drain-Anschluss (D) des Schutz-Transistors (T1) auf dem Ausgangspotential (24V-2) an der Ausgangsseite (2) liegt und der Source-Anschluss (S) des Schutz-Transistors (T1) auf dem Bezugspotential (0V) liegt.

4. Schaltung (S) nach Anspruch 2 oder 3, **dadurch gekennzeichnet, dass** der Schutz-Transistor (T1) über eine Steuervorrichtung (SV) angesteuert wird, welche zu den Drain- (D) und Source-Anschlüssen (S) des Schutz-Transistors (T1) parallel geschaltet ist, wobei die Steuervorrichtung (SV) eine Serienschaltung aus einer Zener-Diode (V5) und einem Widerstand (R1) umfasst, und wobei der Gate-Anschluss (G) des Schutz-Transistors (T1) zwischen die Zener-Diode (V5) und den Widerstand (R1) geschaltet ist.

5. Schaltung (S) nach einem der Ansprüche 1 bis 4, **dadurch gekennzeichnet, dass** sie eine Verpolungsschutz-Schaltung umfasst, die dem Überspannungsschutzelement (V4) in Richtung der Ausgangsseite (2) elektrisch nachgeschaltet ist.

6. Schaltung (S) nach Anspruch 5, **dadurch gekennzeichnet, dass** die Verpolungsschutz-Schaltung eine Diode (V3) umfasst, die in einem Serienpfad zwischen dem Überspannungsschutzelement (V4) und dem Schutz-Transistor (T1) verschaltet ist.

7. Schaltung (S) nach Anspruch 5, **dadurch gekennzeichnet, dass** die Verpolungsschutz-Schaltung einen Feldeffekttransistor (T2) vom Typ PMOS umfasst, der mit seinen Source- (S) und Drain-Anschlüssen (D) in einem Serienpfad zwischen dem Überspannungsschutzelement (V4) und dem Schutz-Transistor (T1) verschaltet ist, wobei dem Gate- (G) und Source-Anschluss (S) des Feldeffekttransistors (T2) eine Zener-Diode (V6) parallel geschaltet ist und der Gate-Anschluss (G) über einen Widerstand (R2) mit einem Bezugspotential (0V) verbunden ist.

8. Schaltung (S) nach einem der Ansprüche 1 bis 7, **dadurch gekennzeichnet, dass** sie für eine Versorgungsgleichspannung von +24 V an der Eingangsseite (1) ausgelegt ist.

9. Anordnung mit einer Schaltung (S) nach einem der Ansprüche 1 bis 8 und zumindest einem Spannungswandler (NT), wobei der Spannungswandler (NT) an der Ausgangsseite (2) der Schaltung (S) angeschlossen ist zum Wandeln einer eingangsseitigen Versorgungsspannung (u1) in eine Betriebsspannung (u3) für dem Spannungswandler (NT) elektrisch nachgeschaltete Komponenten.

10. Elektronisches Gerät mit einer Anordnung nach Anspruch 9.

## Claims

1. Circuit (S) for protection against overvoltages, comprising:
- an input side (1) at which an input voltage (u1) can be applied,
- an output side (2) at which an output voltage (u2) can be tapped, and
- an overvoltage protection element (V4) which is wired in parallel to the input side (1) and is configured, at the occurrence of an overvoltage impulse on the input side (1), to lead off at least a part of the overvoltage impulse via a first current path (i1),
**characterised in that**
a protection transistor (T1) is wired in parallel to the output side (2) and at the occurrence of an overvoltage impulse at the input side (1) passes from a blocking mode into a conducting mode, wherein a second current path (i2) parallel to the first current path (i1) is formed along the protection transistor (T1) such that an equilibrium of the first and second current paths (i1, i2) forms at the overvoltage protection element (V4) and at the protection transistor (T1) and via the second current path (i2) substantially the remaining overvoltage impulse can be led off.

2. Circuit (S) according to claim 1, **characterised in that** the protection transistor (T1) is a field effect transistor, which is with its drain and source connections (D, S) is wired between an output potential (24V-2) at the output side (2) and a ground potential (OV).

3. Circuit (S) according to claim 2, **characterised in that** the protection transistor (T1) is a field effect transistor of the type NMOS, wherein the drain connection (D) of the protection transistor (T1) is at the output potential (24V-2) at the output side (2) and the source connection (S) of the protection transistor (T1) is at ground potential (OV).

4. Circuit (S) according to claim 2 or 3, **characterised in that** the protection transistor (T1) is controlled by a control device (SV), which is wired in parallel to the drain (D) and source (S) connections of the protection transistor (T1), wherein the control device (SV) comprises a series circuit made of a Zener diode (V5) and a resistance (R1), and wherein the gate connection (G) of the protection transistor (T1) is wired between the Zener diode (V5) and the resistance (R1).

5. Circuit (S) according to any of claims 1 to 4, **characterised in that** it comprises a reverse polarity protection circuit, which is wired electrically downstream of the overvoltage protection element (V4) in the direction of the output side (2).

6. Circuit (S) according to claim 5, **characterised in that** the reverse polarity protection circuit comprises a diode (V3) which is wired in a series path between the overvoltage protection element (V4) and the protection transistor (T1).

7. Circuit (S) according to claim 5, **characterised in that** the reverse polarity protection circuit comprises a field effect transistor (T2) of the type PMOS, which is wired with its source (S) and drain (D) connections in a series path between the overvoltage protection element (V4) and the protection transistor (T1), wherein a Zener diode (V6) is wired in parallel to the gate connection (G) and source connection (S) of the field effect transistor (T2), and the gate connection (G) is connected via a resistance (R2) with a ground potential (OV).

8. Circuit (S) according to any of claims 1 to 7, **characterised in that** it is designed for a DC supply voltage of + 24 V at the input side (1).

9. Assembly having a circuit (S) according to any of claims 1 to 8 and at least one voltage transformer (NT), wherein the voltage transformer (NT) is connected with the output side (2) of the circuit (S) for transforming an input-sided supply voltage (u1) into an operating voltage (u3) for components wired electrically downstream of the voltage transformer (NT).

10. Electronic device having an assembly according to claim 9.

## Revendications

1. Circuit (S) de protection contre les surtensions, comprenant :
- un côté d'entrée (1) auquel peut être appliquée une tension d'entrée (u1),
- un côté de sortie (2), auquel peut être prélevée une tension de sortie (u2) et
- un élément de protection anti-surtension (V4) qui est connecté en parallèle au côté d'entrée (1) et est aménagé pour évacuer via un premier trajet de courant (i1) au moins une partie de l'impulsion de surtension à l'apparition d'une impulsion de surtension du côté de sortie (1),
**caractérisé en ce que**
un transistor de protection (T1) est connecté en parallèle au côté de sortie (2) et passe d'un mode bloqué à un mode conducteur lors de l'apparition d'une impulsion de surtension sur le côté d'entrée (1), dans lequel un second trajet de courant (i2) parallèle au premier trajet de courant (i1) est formé le long du transistor de protection (T1) de sorte que se forme un équilibre des premier et second trajets de courant (i1, i2) sur l'élément de protection anti-surtension (V4) et sur le transistor de protection (T1), et que l'impulsion de surtension résiduaire puisse être sensiblement dérivée via le second trajet de courant (i2).

2. Circuit (S) selon la revendication 1, **caractérisé en ce que** le transistor de protection (T1) est un transistor à effet de champ, qui est interconnecté avec ses bornes de drain et de source (D, S) entre un potentiel de sortie (24V-2) du côté de sortie (2) et un potentiel de référence (OV).

3. Circuit (S) selon la revendication 2, **caractérisé en ce que** le transistor de protection (T1) est un transistor à effet de champ du type NMOS, dans lequel la borne de drain (D) du transistor de protection (T1) est au potentiel de sortie (24V-2) du côté de sortie (2) et la borne de source (S) du transistor de protection (T1) est au potentiel de référence (OV).

4. Circuit (S) selon la revendication 2 ou 3, **caractérisé en ce que** le transistor de protection (T1) est commandé via un dispositif de commande (SV) qui est connecté en parallèle aux bornes de drain (D) et de source (S) du transistor de protection (T1), dans lequel le dispositif de commande (SV) comprend un circuit en série constitué d'une diode Zener (V5) et d'une résistance (R1) et dans lequel la borne de grille (G) du transistor de protection est connectée entre la diode Zener (V5) et la résistance (R1).

5. Circuit (S) selon l'une quelconque des revendications 1 à 4, **caractérisé en ce qu'**il comprend un circuit de protection contre l'inversion de polarité qui est connecté électriquement en aval de l'élément de protection anti-surtension (V4) dans la direction du côté de sortie (2).

6. Circuit (S) selon la revendication 5, **caractérisé en ce que** le circuit de protection contre l'inversion de polarité comprend une diode (V3) qui est interconnectée dans un trajet en série entre l'élément de protection anti-surtension (V4) et le transistor de protection (T1).

7. Circuit (S) selon la revendication 5, **caractérisé en ce que** le circuit de protection contre l'inversion de polarité comprend un transistor à effet de champ (T2) du type PMOS, qui est interconnecté avec la borne de source (S) et la borne de drain (D) dans un trajet en série entre l'élément de protection anti-surtension (V4) et le transistor de protection (T1), dans lequel est connectée en parallèle à la borne de grille (G) et à la borne de source (S) du transistor à effet de champ (T2) une diode Zener (V6) et la borne de grille (G) est connectée au potentiel de référence (OV) via une résistance (R2).

8. Circuit (S) selon l'une quelconque des revendications 1 à 7, **caractérisé en ce qu'**il est conçu pour une tension continue d'alimentation de + 24 V sur le côté d'entrée (1).

9. Agencement pourvu d'un circuit (S) selon l'une quelconque des revendications 1 à 8 et d'au moins un transformateur de potentiel (NT) dans lequel le transformateur de potentiel (NT) est connecté sur le côté de sortie (2) du circuit (S) pour transformer une tension d'alimentation côté entrée (u1) en une tension d'exploitation (u3) pour des composants connectés électriquement en aval du transformateur de potentiel (NT).

10. Appareil électronique pourvu d'un agencement selon la revendication 9.
